# FASCICULE DE BREVET EUROPEEN

(11) **EP 3 414 090 B1**
(45) Date de publication et mention de la délivrance du brevet: **30.12.2020**
(21) Numéro de dépôt: 17707381.4
(22) Date de dépôt: 06.02.2017
(51) Int. Cl.: B32B 17/10, B44C 5/04

(54) **VERRE FEUILLETE DECORATIF**
GLAS MIT DEKORATIONSBESCHICHTUNG
DECORATIVE LAMINATED GLASS

(30) Priorité: 08.02.2016 FR 1650965
(43) Date de publication de la demande: 19.12.2018
(73) Titulaire: SAINT-GOBAIN GLASS FRANCE, 92400 Courbevoie (FR)
(72) Inventeur: GARCIA FERNANDEZ, Julio, 15635 Cerdeirido-Bemantes-Mino / La Coruna (ES); ALVAREZ-CASARIEGO ALVAREZ, Maria José, 33405 Salinas / Asturias (ES)
(74) Mandataire: Saint-Gobain Recherche
(86) Numéro de dépôt international: PCT/FR2017/050262
(87) Numéro de publication internationale: WO 2017/137683

(56) Documents cités:
- EP-A1- 0 361 872
- EP-A1- 1 316 415
- WO-A1-2010/015391
- FR-A1- 3 012 363
- US-A- 3 661 686
- US-A1- 2008 223 436
- US-A1- 2014 104 690
- US-A1- 2015 138 627

## Description

La présente invention concerne le domaine des panneaux de verre décoratifs. Elle vise plus particulièrement les panneaux décoratifs pour des applications intérieures telles que le partitionnement de bureaux, les revêtements muraux, les crédences, les portes et les balustrades, ou extérieures telles que les vitrages de façade, les brise-vues et les brise-soleil.

Le verre est un matériau largement utilisé par les architectes aussi bien pour l'aménagement intérieur des bâtiments que pour leur habillage extérieur. Il existe par conséquent une demande continuelle de nouveaux produits permettant d'obtenir les rendus esthétiques souhaités par les architectes.

Il est connu des panneaux décoratifs constitués de verres feuilletés dans lesquels sont insérés des tissus, notamment métalliques, voir par exemple EP0361872 ou WO2010/015391. De tels panneaux sont obtenus par feuilletage du tissu entre deux feuilles de verre plat. Le tissu doit être inséré entre les deux feuilles de verre au moment de la fabrication du verre feuilleté, en même temps que l'intercalaire de feuilletage. Ces panneaux ont cependant plusieurs inconvénients. L'utilisation de tissus, notamment métalliques, augmente significativement non seulement le poids des panneaux mais également leur prix de revient. Par ailleurs, l'insertion d'une feuille fonctionnelle supplémentaire (le tissu) lors de la fabrication complique les opérations de feuilletage.

La présente invention propose un panneau de verre décoratif permettant d'obvier aux inconvénients ci-dessus tout en élargissant le choix de solutions esthétiques disponible. Plus particulièrement, la présente invention concerne un verre feuilleté comprenant une première feuille de verre, une deuxième feuille de verre et un intercalaire de feuilletage entre la première feuille de verre et la deuxième feuille de verre ; ladite première feuille de verre étant une feuille de verre texturée présentant une surface interne texturée en contact avec l'intercalaire de feuilletage, caractérisé en ce qu'un premier revêtement réfléchissant est disposé entre la première feuille de verre et l'intercalaire de feuilletage et un deuxième revêtement réfléchissant est disposé entre la deuxième feuille de verre et l'intercalaire de feuilletage, les premier et deuxième revêtements réfléchissants étant en contact direct avec la surface interne des première et deuxième feuille de verre, et ledit verre feuilleté présentant une réflexion de la lumière visible sur chacune de ses faces supérieure à 10%.

En choisissant un verre texturé ayant une texture imitant les mailles d'un tissu, le verre feuilleté selon l'invention permet d'obtenir un rendu esthétique comparable aux panneaux de verre comprenant un tissu métallique tels que mentionnés ci-dessus, tout en s'affranchissant de l'insertion d'un tissu métallique. Le verre feuilleté selon l'invention, n'est cependant pas limité à ce rendu esthétique et permet au contraire un large éventail de possibilités en fonction des combinaisons de textures des feuilles de verre et de revêtements choisies. Le verre feuilleté selon l'invention permet également d'obtenir un rendu esthétique asymétrique, c'est-à-dire un rendu esthétique différent sur chacune des faces du verre feuilleté, en choisissant des textures et/ou des revêtements différents pour chacune des feuilles de verre.

Comme pour un verre feuilleté classique, le verre feuilleté selon l'invention met en œuvre seulement trois feuilles (deux feuilles de verres revêtues et un intercalaire de feuilletage). Par rapport à d'autres solutions existantes comme celle d'insérer un tissu dans un verre feuilleté, la présente invention présente un avantage économique non seulement du point de vue du coût des matières premières (aucune feuille fonctionnelle supplémentaire) mais également du point de vue coût de fabrication (les opérations de feuilletage nécessaires à sa fabrication ne diffèrent pas d'un procédé de feuilletage classique).

Le verre feuilleté selon l'invention comprend une première feuille de verre présentant une surface interne en contact avec l'intercalaire de feuilletage et une surface externe opposée à ladite surface interne. La surface externe de la première feuille de verre est de préférence essentiellement lisse, c'est-à-dire une surface pour laquelle les irrégularités de surface sont telle que le rayonnement incident sur la surface n'est pas significativement dévié par ces irrégularités de surface. Dans certains modes de réalisations, la surface externe de la première feuille de verre peut être partiellement ou entièrement texturée. La surface interne de la première feuille de verre peut être partiellement texturée mais elle est de préférence entièrement texturée. Une surface texturée est une surface pour laquelle l'état de surface varie à une échelle plus grande que la longueur d'onde du rayonnement incident sur la surface, de sorte que le rayonnement incident est transmis et réfléchi de manière diffuse par la surface. La texturation de la surface interne de la première feuille de verre peut être obtenue par tout procédé connu de texturation, par exemple par embossage de la surface interne de la feuille de verre préalablement chauffée à une température à laquelle il est possible de la déformer, en particulier par laminage au moyen d'un rouleau ayant à sa surface une texturation complémentaire de la texturation à former sur la surface interne de la feuille de verre; par abrasion au moyen de particules ou de surfaces abrasives, en particulier par sablage ; par traitement chimique, notamment traitement à l'acide; ou par gravure, en utilisant éventuellement des masques pour conserver au moins une partie de la surface du substrat non texturée. La surface interne texturée peut être formée par une pluralité de motifs en creux ou en saillie par rapport à un plan général de la surface. La surface interne texturée peut présenter des motifs répartis de manière aléatoire ou de manière périodique. Elle peut notamment présenter plusieurs motifs de nature différente séparés sur différentes zones de la surface. La nature de ces motifs n'est pas limitée et peut être par exemple des cônes, des pyramides, des rainures, des nervures, des vaguelettes... La surface texturée de la première feuille de verre présente typiquement une rugosité Ra supérieure à 0,5 µm, par exemple de 1 µm à 2 mm. Lorsque la feuille de verre est une feuille de verre imprimé, la surface texturée présente par exemple une rugosité Ra de 1 à 100 µm (micro-texturation), de 0,3 à 1 mm (mini-texturation) ou supérieure à 1 mm. Des exemples de feuilles de verre texturées directement utilisables comprennent les verres commercialisés par Saint-Gobain Glass dans la gamme SGG SATINOVO®, qui présentent sur l'une de leurs surfaces une texture obtenue par sablage ou attaque acide ; les verres commercialisés par Saint-Gobain Glass dans la gamme SGG DECORGLASS®, dans la gamme SGG MASTERGLASS® ou dans la gamme SGG ALBARINO®, qui présentent sur l'une de leurs surfaces une texture obtenue par laminage.

Le verre feuilleté selon l'invention comprend une deuxième feuille de verre présentant une surface interne en contact avec l'intercalaire de feuilletage et une surface externe opposée à ladite surface interne. La deuxième feuille de verre peut être une feuille de verre plat, notamment une feuille de verre flotté, c'est-à-dire présentant une surface interne lisse et une surface externe lisse. Cependant, la deuxième feuille de verre est de préférence également une feuille de verre texturée présentant une surface interne texturée. L'utilisation de deux feuilles de verre texturées a pour avantage d'améliorer l'adhésion des deux feuilles entre elles par l'intermédiaire de l'intercalaire de feuilletage. Lorsqu'elle présente une surface interne texturée, la deuxième feuille de verre peut être définie de la même manière que ci-dessus pour la première feuille de verre. La deuxième feuille de verre peut présenter une texture identique à la première feuille de verre ou au contraire présenter une texture différente de la première feuille de verre de sorte que le verre feuilleté présente un aspect différent sur chacune de ses faces.

Les premières et deuxièmes feuilles de verre peuvent être faites en verre clair ou extra-clair ou être au contraire faites en verre teinté, tel qu'un verre jaune, bleu, vert ou bronze. Elles ont typiquement chacune une épaisseur de 2 à 20 mm, notamment 3 à 12 mm, par exemple 4, 6, 8 ou 10 mm.

Un premier revêtement réfléchissant est disposé entre la première feuille de verre et l'intercalaire de feuilletage et un deuxième revêtement réfléchissant et disposé entre la deuxième feuille de verre et l'intercalaire. Par « revêtement réfléchissant » au sens de la présente invention, on entend un revêtement présentant une réflexion de la lumière visible supérieure à 10%, de préférence supérieure à 15%, plus préférentiellement supérieure à 30%, encore plus préférentiellement supérieure à 40%. La réflexion du revêtement est mesurée selon la norme ISO 9050:2003. Les premier et deuxième revêtements réfléchissants sont de préférence des revêtements multicouches. Par « revêtement multicouche », on entend un revêtement formé par un empilement de couches minces, obtenu notamment par pulvérisation cathodique magnétron. Les premier et deuxième revêtements sont en contact direct avec la surface interne des feuilles de verre. Au sens de la présente invention, un élément A « en contact direct » avec un élément B signifie qu'aucun autre élément n'est disposé entre lesdits éléments A et B. Au contraire, un élément A « en contact » avec un élément B n'exclut pas la présence d'un autre élément entre lesdits éléments A et B. Les revêtements multicouches comprennent typiquement 2 à 15 couches minces, par exemple 3 à 7.

Chacun des premier et deuxième revêtements comprend de préférence au moins une couche fonctionnelle. On entend par « couche fonctionnelle » dans la présente invention une couche mince qui confère les propriétés de réflexion lumineuse au revêtement. La couche fonctionnelle est de préférence une couche nitrurée, notamment à base de nitrure de niobium, de nitrure de titane, de nitrure d'aluminium ou de nitrure de silicium ; ou une couche métallique, notamment à base de d'argent, d'or, de titane, de chrome, de nickel, de cuivre, de tungstène, de zirconium, de niobium, de silicium, d'aluminium, d'acier inoxydable, ou de leurs alliages (notamment NiCr). L'expression « à base de » en référence à la composition d'une couche signifie que ladite couche comprend plus de 80%, de préférence plus de 90%, plus préférentiellement plus de 95%, en poids du matériau concerné. La couche peut être essentiellement constituée dudit matériau, c'est-à-dire comprenant plus de 99% en poids dudit matériau. La couche fonctionnelle a généralement une épaisseur de 3 à 50 nm, de préférence de 5 à 30 nm.

Chacun des premier et deuxième revêtements peut également comprendre une ou plusieurs couches diélectriques disposées en-dessous et/ou au-dessus de la couche fonctionnelle. Dans la présente demande, les termes « en-dessous » et « au-dessus », associés à la position d'une première couche par rapport à une deuxième couche, signifient que la première couche est plus proche, respectivement plus éloignée, de la feuille de verre que la deuxième couche. Ces termes n'excluent cependant pas la présence d'autres couches entre lesdites première et deuxième couches. La couche diélectrique peut être une couche à base d'oxyde, tel que l'oxyde silicium, l'oxyde de titane, l'oxyde d'étain ou un oxyde mixte d'étain et de zinc, de nitrure, tel qu'un nitrure d'aluminium ou un nitrure de silicium, ou d'oxynitrure, tel qu'un oxynitrure de silicium. Disposée entre la feuille de verre et la couche fonctionnelle, la couche diélectrique peut permettre d'améliorer l'adhérence de la couche fonctionnelle. Disposée au-dessus de la couche fonctionnelle, notamment en tant que dernière couche du revêtement, la couche diélectrique peut servir de couche de protection. Les couches diélectriques ont typiquement une épaisseur de 5 à 150 nm, de préférence de 10 à 50 nm.

Les revêtements peuvent également comprendre une couche de blocage en-dessous et/ou au-dessus de la couche fonctionnelle, en particulier lorsque celle-ci est une couche métallique. Les couches de blocage sont généralement en contact direct avec la couche fonctionnelle. Les couches de blocage protègent la couche fonctionnelle d'une éventuelle dégradation lors du dépôt d'une couche diélectrique au-dessus de la couche fonctionnelle et/ou lors d'un éventuel traitement thermique du type bombage ou trempe. Les couches de blocage sont généralement des couches métallique, telles que des couches à base de d'or, de titane ou de NiCr, mais qui peuvent être partiellement oxydées et/ou nitrurées lors du dépôt des couches diélectriques ou des éventuels traitements thermiques. Les couches de blocages ont généralement une épaisseur de 0,5 à 2 nm.

Le choix de la nature des couches, de leurs épaisseurs et de leurs combinaisons dépend de l'effet souhaité notamment en termes de couleur, de réflexion lumineuse et de transmission lumineuse. A titre d'exemples, Les revêtements réfléchissants peuvent être formés par les empilements suivants :
- Verre // Si₃N₄ / NiCr / Ag /NiCr /Si₃N₄
- Verre // TiO₂ / Si₃N₄ / NiCrN / Ag /NiCrN /Si₃N₄
- Verre // Si₃N₄ / NbN / Si₃N₄
- Verre // TiO₂ / Si₃N₄ / NbN / Si₃N₄
- Verre // Si₃N₄ / NiCu / Si₃N₄
- Verre // Si₃N₄ / CrSi / Si₃N₄
- Verre // Si₃N₄ / CrAl / Si₃N₄/Ti
- Verre // Si₃N₄ / Cr / Si₃N₄ / Ti
- Verre // Si₃N₄ / NiCrW / Si₃N₄
- Verre // Si₃N₄ / CrZr / TiZnOₓ / Si₃N₄.

L'intercalaire de feuilletage est une feuille en matériau polymère thermoformable ou sensible à la pression. Il peut s'agir, en particulier, d'un intercalaire de feuilletage à base de polybutyral de vinyle (PVB), d'éthylène-acétate de vinyle (EVA), de polyuréthane (PU), de polyéthylène téréphtalate (PET) ou de polychlorure de vinyle (PVC). Un intercalaire de feuilletage à base d'EVA est préféré car il facilite le feuilletage et améliore l'adhérence des feuilles de verre texturées entre elles. L'intercalaire de feuilletage présente généralement une épaisseur de l'ordre de 0,2 à 1,5 mm, par exemple aux environs de 0,76 mm.

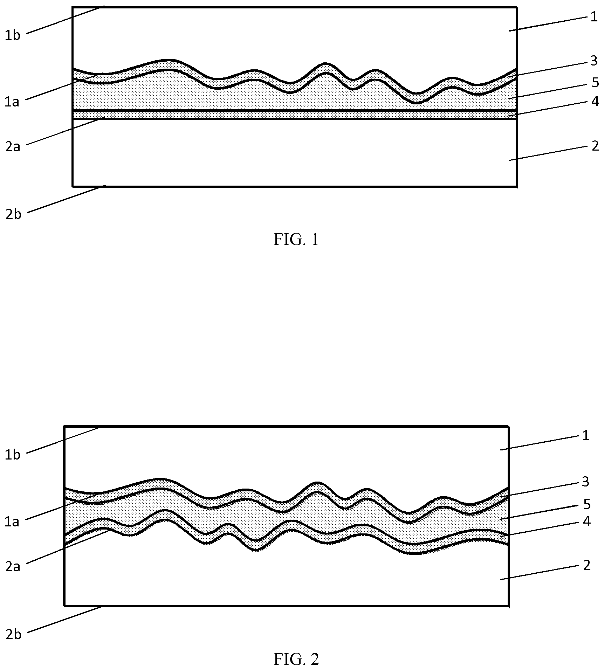

Les FIG. 1 et 2 illustrent deux modes de réalisation de verres feuilletés décoratifs selon la présente invention. La première feuille de verre **1** et la deuxième feuille de verre **2** présentent chacune respectivement un premier revêtement réfléchissant **3** et un deuxième revêtement réfléchissant **4** directement en contact avec leurs surfaces internes **1a** et **2a.** Un intercalaire de feuilletage **5** est disposé entre les première et deuxième feuilles de verre **1** et **2.** La première feuille de verre **1** présente une surface externe **lb** lisse et une surface interne **la** texturée. Dans la FIG. 1, les deux surfaces, externe **2b** et interne **2a,** de la deuxième feuille de verre **2** sont lisses. Dans la FIG. 2, la deuxième feuille de verre **2** présente une surface externe **2a** lisse et une surface interne **2a** texturée.

Un exemple de procédé de fabrication du verre feuilleté décoratif selon l'invention est décrit ci-après.

La première feuille de verre peut être obtenue, comme indiqué plus haut, par sablage, par attaque acide ou par gravure d'au moins une partie d'au moins une face d'une feuille de verre plat, notamment une feuille de verre flotté. Il s'agit cependant de préférence d'une feuille de verre imprimée dont la texture du motif de ce verre est obtenue par laminage de la coulée de verre entre deux cylindres dont au moins un est gravé. La deuxième feuille de verre peut être une feuille de verre plat, notamment une feuille de verre flotté, ou une feuille de verre texturée obtenue de façon similaire à la première feuille de verre.

Les revêtements réfléchissants sont déposés sur la surface interne texturée de la première feuille de verre et sur la surface interne, texturée ou non, de la deuxième feuille de verre. Le dépôt des revêtements réfléchissants, qu'ils soient monocouche ou formée par un empilement multicouche, est de préférence réalisé, sous vide, par pulvérisation cathodique assistée par champ magnétique (pulvérisation dite "cathodique magnétron").

Suite au dépôt des revêtements réfléchissants, on positionne successivement, en regard de la première feuille de verre, l'intercalaire de feuilletage et la deuxième feuille de verre, de façon à présenter les revêtements en contact avec l'intercalaire de feuilletage, et on applique à la structure feuilletée ainsi formée une compression et/ou un chauffage, au moins à la température de transition vitreuse de l'intercalaire de feuilletage, par exemple dans une presse ou une étuve. Au cours de ce procédé de feuilletage, l'intercalaire de feuilletage se conforme à la texture de la surface texturée de la première feuille de verre, et éventuellement de la deuxième feuille de verre.

Le verre feuilleté décoratif selon l'invention est de préférence un verre occultant. Il présente ainsi typiquement une transmission de la lumière visible sur chacune de ses faces inférieure à 50%, de préférence inférieure à 30%, plus préférentiellement inférieure à 10%. Il présente par ailleurs une réflexion de la lumière visible sur chacune de ses faces supérieure à 10%, de préférence supérieure à 30%, plus préférentiellement supérieure à 50%. La transmission de la lumière visible (VLT), ou transmission lumineuse, représente la quantité, exprimée en pourcentage, de lumière visible incidente passant au travers du verre feuilleté. La réflexion de la lumière visible (VLR), ou réflexion lumineuse, représente la quantité, exprimée en pourcentage, de lumière visible incidente réfléchie par le verre feuilleté. La VLT et la VLR sont mesurées selon la norme ISO 9050:2003.

Le verre feuilleté décoratif selon l'invention peut être un verre plat ou un verre bombé. Il peut être utilisé aussi bien pour l'aménagement intérieur des bâtiments que pour leur habillage extérieur. Des applications en aménagement intérieur des bâtiments comprennent par exemple les partitionnements de bureaux, les revêtements muraux, les crédences, les portes et les balustrades. Des applications en habillage extérieur des bâtiments comprennent par exemple les vitrages de façade, les brise-vues, les brise-soleil et les balustrades. Ainsi, la présente invention concerne également un article comprenant un verre feuilleté tel que décrit ci-dessus, ledit article étant choisi parmi les cloisons de bureaux, les revêtements muraux, les crédences, les portes, les balustrades, les vitrages de façade, les brise-vues et les brise-soleil.

L'invention est illustrée à l'aide des exemples suivants.

### EXEMPLE

Un verre feuilleté décoratif selon l'invention, tel qu'illustré à la FIG. 2, a été réalisé à partir de deux feuilles de verre texturées de type THELA de la gamme SGG DECORGLASS® commercialisées par la Demanderesse. Un revêtement réfléchissant constitué d'un empilement verre//Si₃N₄(30 nm)/NbN(7 nm)/Si₃N₄(10 nm) a été déposé par pulvérisation cathodique magnétron sur la surface texturée de chacune des deux feuilles de verre. Les conditions opératoire pour le dépôt de chaque type de couche mince est résumé dans le tableau 1 ci-dessous :

**Tableau 1**

| Couche | Cible | Pression | Gaz |
|---|---|---|---|
| Si₃N₄ | SiAl | 2,5 mTorr | N₂ (40%) - Ar (60%) |
| NbN | Nb | 2,5 mTorr | N₂ (40%) - Ar (60%) |
| Si₃N₄ | SiAl | 3mTorr | N₂ (70%) - Ar (30%) |

Les deux feuilles de verre revêtues ont ensuite été feuilletées à l'aide d'un intermédiaire de feuilletage en EVA en disposant la face texturée revêtue de chacune des feuilles de verre en contact avec l'intermédiaire de feuilletage.

Le verre feuilleté ainsi obtenu présente, sur chacune de ses faces, une apparence comparable à un verre feuilleté comprenant un tissu métallique inséré entre deux feuilles de verre plat. Il présente une transmission lumineuse de 34% et une réflexion lumineuse de 16% sur chacune de ses faces.

## Revendications

1. Verre feuilleté comprenant une première feuille de verre (1), une deuxième feuille de verre (2) et un intercalaire de feuilletage (5) entre la première feuille de verre (1) et la deuxième feuille de verre (2) ; ladite première feuille de verre (1) étant une feuille de verre texturée présentant une surface interne texturée (1a) en contact avec l'intercalaire de feuilletage (5), **caractérisé en ce qu'**un premier revêtement réfléchissant (3) est disposé entre la première feuille de verre (1) et l'intercalaire de feuilletage (5) et un deuxième revêtement réfléchissant (4) est disposé entre la deuxième feuille de verre (2) et l'intercalaire de feuilletage (5), les premier et deuxième revêtements réfléchissants (3, 4) étant en contact direct avec la surface interne (1a, 2a) des première et deuxième feuilles de verre (1, 2), et ledit verre feuilleté présentant une réflexion de la lumière visible, mesurée selon la norme ISO 9050:2003, sur chacune de ses faces supérieure à 10%.

2. Verre feuilleté selon la revendication 1, **caractérisé en ce que** la deuxième feuille de verre (2) est une feuille de verre texturée présentant une surface interne texturée (2a) en contact avec l'intercalaire de feuilletage (5).

3. Verre feuilleté selon l'une des revendications 1 ou 2, **caractérisé en ce que** lesdits premier et deuxième revêtements réfléchissants (3, 4) sont des revêtements multicouches.

4. Verre feuilleté selon l'une quelconque des revendications 1 à 3, **caractérisée en ce que** lesdits premier et deuxième revêtements réfléchissants (3, 4) comprennent chacun une couche fonctionnelle choisie parmi les couches métalliques et les couches nitrurées.

5. Verre feuilleté selon la revendication 4, **caractérisé en ce que** la couche fonctionnelle est une couche nitrurée choisie parmi les couches à base de nitrure de niobium, de nitrure de titane, de nitrure d'aluminium ou de nitrure de silicium.

6. Verre feuilleté selon la revendication 4, **caractérisé en ce que** la couche fonctionnelle est une couche métallique choisie parmi les couches à base de base d'argent, d'or, de titane, de chrome, de nickel, de cuivre, de tungstène, de zirconium, de niobium, de silicium, d'aluminium, d'acier inoxydable, ou de leurs alliages.

7. Verre feuilleté selon l'une quelconque des revendications 1 à 6, **caractérisée en ce que** ledit verre feuilleté présente une réflexion de la lumière visible, mesurée selon la norme ISO 9050:2003, sur chacune de ses faces supérieure à 30%, de préférence supérieure à 50%.

8. Verre feuilleté selon l'une quelconque des revendications 1 à 7, **caractérisée en ce que** ledit verre feuilleté présente une transmission de la lumière visible, mesurée selon la norme ISO 9050:2003, sur chacune de ses faces inférieure à 50%, de préférence inférieure à 10%.

9. Article comprenant un verre feuilleté selon l'une des revendications 1 à 8, ledit article étant choisi parmi les cloisons de bureaux, les revêtements muraux, les crédences, les portes, les balustrades, les vitrages de façade, les brise-vues et les brise-soleil.

10. Procédé de fabrication d'un verre feuilleté selon l'une des revendications 1 à 8 comprenant :
- la fourniture d'une première feuille de verre présentant une surface interne texturée et une surface externe, d'un intercalaire de feuilletage, et d'une deuxième feuille de verre présentant une surface interne et une surface externe ;
- le dépôt d'un premier revêtement réfléchissant sur, et en contact direct avec, la surface texturée de la première feuille de verre ;
- le dépôt d'un deuxième revêtement réfléchissant sur, et en contact direct avec, la surface interne de la deuxième feuille de verre ;
- le positionnement successif, en regard de la première feuille de verre, de l'intercalaire de feuilletage et de la deuxième feuille de verre, de façon à présenter le premier revêtement et le deuxième revêtement en contact avec l'intercalaire de feuilletage ; et
- le chauffage de la structure feuilletée ainsi formée à une température supérieure à la température de transition vitreuse de l'intercalaire de feuilletage.

## Patentansprüche

1. Verbundglas, umfassend eine erste Glasscheibe (1), eine zweite Glasscheibe (2) und eine Laminierzwischenschicht (5) zwischen der ersten Glasscheibe (1) und der zweiten Glasscheibe (2); wobei die erste Glasscheibe (1) eine texturierte Glasscheibe mit einer texturierten Innenfläche (1a) in Kontakt mit der Laminierzwischenschicht (5) ist, die **dadurch gekennzeichnet ist, dass** eine erste reflektierende Beschichtung (3) zwischen der ersten Glasscheibe (1) und der Laminierzwischenschicht (5) angeordnet ist und eine zweite reflektierende Beschichtung (4) zwischen der zweiten Glasscheibe (2) und der Laminierzwischenschicht (5) angeordnet ist, wobei die erste und die zweite reflektierende Beschichtung (3, 4) in direktem Kontakt mit der Innenfläche (1a, 2a) der ersten und zweiten Glasscheibe (1, 2) steht und das Verbundglas eine Reflexion von sichtbarem Licht, gemessen gemäß der Norm ISO 9050:2003, auf jeder seiner Seiten von über 10 % aufweist.

2. Verbundglas nach Anspruch 1, **dadurch gekennzeichnet, dass** die zweite Glasscheibe (2) eine texturierte Glasscheibe mit einer texturierten Innenfläche (2a) in Kontakt mit der Laminierzwischenschicht (5) ist.

3. Verbundglas nach einem der Ansprüche 1 oder 2, **dadurch gekennzeichnet, dass** die erste und die zweite reflektierende Beschichtung (3, 4) mehrschichtige Beschichtungen sind.

4. Verbundglas nach einem der Ansprüche 1 bis 3, **dadurch gekennzeichnet, dass** die erste und die zweite reflektierende Beschichtung (3, 4) jeweils eine Funktionsschicht umfassen, die aus den Metallschichten und den Nitrierschichten ausgewählt ist.

5. Verbundglas nach Anspruch 4, **dadurch gekennzeichnet, dass** die Funktionsschicht eine Nitrierschicht ist, die aus den Schichten auf der Basis von Niobnitrid, Titannitrid, Aluminiumnitrid oder Siliciumnitrid ausgewählt ist.

6. Verbundglas nach Anspruch 4, **dadurch gekennzeichnet, dass** die Funktionsschicht eine Metallschicht ist, die aus den Schichten auf der Basis von Silber-, Gold-, Titan-, Chrom-, Nickel-, Kupfer-, Wolfram-, Zirkonium-, Niob-, Silicium-, Aluminium-, Edelstahlbasis oder deren Legierungen ausgewählt ist.

7. Verbundglas nach einem der Ansprüche 1 bis 6, **dadurch gekennzeichnet, dass** das Verbundglas eine Reflexion des sichtbaren Lichts, gemessen gemäß der Norm ISO 9050:2003, auf jeder seiner Seiten von über 30 %, vorzugsweise über 50 %, aufweist.

8. Verbundglas nach einem der Ansprüche 1 bis 7, **dadurch gekennzeichnet, dass** das Verbundglas eine Durchlässigkeit des sichtbaren Lichts, gemessen gemäß der Norm ISO 9050:2003, auf jeder seiner Seiten von unter 50 %, vorzugsweise unter 10 %, aufweist.

9. Artikel enthaltend ein Verbundglas nach einem der Ansprüche 1 bis 8, wobei der Artikel ausgewählt ist aus Bürotrennwänden, Wandbekleidungen, Küchenwandbekleidungen, Türen, Balustraden, Fassadenverglasungen, Sichtschutz- und Sonnenschutzvorrichtungen.

10. Verfahren zur Herstellung eines Verbundglases nach einem der Ansprüche 1 bis 8, enthaltend :
- Bereitstellen einer ersten Glasscheibe mit einer texturierten Innenfläche und einer Außenfläche, und einer zweiten Glasscheibe mit einer Innenfläche und einer Außenfläche,
- Aufbringen einer ersten reflektierenden Beschichtung auf die texturierte Fläche der ersten Glasscheibe, in direktem Kontakt damit,
- Aufbringen einer zweiten reflektierenden Beschichtung auf die Innenfläche der zweiten Glasscheibe, in direktem Kontakt damit,
- Auflegen einer Laminierzwischenschicht auf die erste Glasscheibe und daraufhin der zweiten Glasscheibe auf die Laminierzwischenschicht, sodass die erste Beschichtung und die zweite Beschichtung mit der Laminierzwischenschicht in Kontakt sind, und
- Erhitzung der so erhaltenen Verbundstruktur auf eine Temperatur, die höher als die Glasübergangstemperatur der Laminierzwischenschicht ist.

## Claims

1. A laminated glass comprising a first glass sheet (1), a second glass sheet (2) and a laminating interlayer (5) between the first glass sheet (1) and the second glass sheet (2); said first glass sheet (1) being a textured glass sheet having a textured inner surface (1a) in contact with the laminating interlayer (5), **characterized in that** a first reflective coating (3) is arranged between the first glass sheet (1) and the laminating interlayer (5) and a second reflective coating (4) is arranged between the second glass sheet (2) and the laminating interlayer (5), the first and second reflective coatings (3, 4) being in direct contact with the inner surface (1a, 2a) of the first and second glass sheet (1, 2), and said laminated glass having a visible light reflection, measured according to ISO 9059:2003, on each of its faces above 10%.

2. The laminated glass as claimed in claim 1, **characterized in that** the second glass sheet (2) is a textured glass sheet having a textured internal surface (2a) in contact with the laminating interlayer (5).

3. The laminated glass as claimed in one of claims 1 or 2, **characterized in that** said first and second reflective coatings (3, 4) are multilayer coatings.

4. The laminated glass as claimed in any one of claims 1 to 3, **characterized in that** said first and second reflective coatings (3, 4) each comprise a functional layer selected from metallic layers and nitrided layers.

5. The laminated glass as claimed in claim 4, **characterized in that** the functional layer is a nitrided layer selected from layers based on niobium nitride, titanium nitride, aluminum nitride or silicon nitride.

6. The laminated glass as claimed in claim 4, **characterized in that** the functional layer is a metallic layer selected from layers based on silver, gold, titanium, chromium, nickel, copper, tungsten, zirconium, niobium, silicon, aluminum, stainless steel, or alloys thereof.

7. The laminated glass as claimed in any one of claims 1 to 6, **characterized in that** said laminated glass has visible light reflection, measured according to ISO 9059:2003, on each of its faces above 30%, preferably above 50%.

8. The laminated glass as claimed in any one of claims 1 to 7, **characterized in that** said laminated glass has visible light transmission, measured according to ISO 9059:2003, on each of its faces below 50%, preferably below 10%.

9. An article comprising the laminated glass as claimed in one of claims 1 to 8, said article being selected from partitions for offices, wall coverings, credenzas, doors, balustrades, facade glazing, view breakers and sun breakers.

10. A process for manufacturing the laminated glass as claimed in one of claims 1 to 8 comprising:
- providing a first glass sheet having a textured inner surface and an outer surface, a laminating interlayer, and a second glass sheet having an inner surface and an outer surface;
- depositing a first reflective coating in direct contact on, and in direct contact with, the textured surface of the first glass sheet;
- depositing a second reflective coating on, and in direct contact with, the inner surface of the second glass sheet;
- successive positioning, opposite the first glass sheet, of the laminating interlayer and of the second glass sheet, so as to have the first coating and the second coating in contact with the laminating interlayer; and
- heating the laminated structure thus formed at a temperature above the glass transition temperature of the laminating interlayer.
